# EUROPÄISCHE PATENTANMELDUNG

(11) **EP 1 422 467 A2**
(43) Veröffentlichungstag der Anmeldung: **26.05.2004**
(21) Anmeldenummer: 03022738.3
(22) Anmeldetag: 09.10.2003
(51) Int. Cl.: F21L 4/00, B62J 6/02, F21V 5/04, F21V 23/04

(54) **Mobile Leuchte**

(30) Priorität: 25.06.2003 DE 10328576; 22.11.2002 DE 10254630; 22.11.2002 DE 10254634
(71) Anmelder: Mellert SLT GmbH & Co. KG, 75015 Bretten (DE)
(72) Erfinder: Twardawski, Harald, 76437 Rastatt (DE)
(74) Vertreter: Manitz, Finsterwald & Partner GbR

(57) **Zusammenfassung**

Eine mobile Leuchte umfasst eine erste Leuchtanordnung, die ein erstes Leuchtdiodenelement (20) und eine diesem zugeordnete erste abbildende Einrichtung (32) zur Bündelung oder Aufweitung eines von dem ersten Leuchtdiodenelement (20) abgegebenen ersten Lichtbündels (36) oder mehrere erste Leuchtdiodenelemente (20) und diesen jeweils zugeordnete erste abbildende Einrichtungen (32) zur Bündelung oder Aufweitung von von den ersten Leuchtdiodenelementen (20) abgegebenen ersten Lichtbündeln (36) aufweist, eine zweite Leuchtanordnung, die ein zweites Leuchtdiodenelement (22) und eine diesem zugeordnete zweite abbildende Einrichtung (34) zur Bündelung oder Aufweitung eines von dem zweiten Leuchtdiodenelement (22) abgegebenen zweiten Lichtbündels (40) oder mehrere zweite Leuchtdiodenelemente (22) und diesen jeweils zugeordnete zweite abbildende Einrichtungen (34) zur Bündelung oder Aufweitung von von den zweiten Leuchtdiodenelementen (22) jeweils abgegebenen zweiten Lichtbündeln (40) aufweist, wobei das zweite Lichtbündel (40) bzw. die zweiten Lichtbündel (40) stärker als das erste Lichtbündel (36) bzw. die ersten Lichtbündel (36) gebündelt ist bzw. sind, und eine Schaltvorrichtung (24,30), mittels derer das Leuchtdiodenelement (20,22) bzw. die Leuchtdiodenelemente (20,22) einer der Leuchtanordnungen getrennt von dem Leuchtdiodenelement (20,22) bzw. den Leuchtdiodenelementen (20,22) der anderen Leuchtanordnung ein- und ausschaltbar sind.

## Beschreibung

Die vorliegende Erfindung betrifft eine mobile Leuchte.

Mobile Leuchten sind grundsätzlich bekannt. Hierunter werden insbesondere Leuchten verstanden, die transportabel und während ihres Einsatzes ohne einen Anschluss an ein ortsfestes Stromnetz betreibbar sind. Beispiele für solche mobilen Leuchten sind zum Beispiel Taschenleuchten bzw. -lampen, Stirnleuchten bzw. -lampen oder auch Leuchten für Fahrzeuge.

Für viele Einsatzzwecke ist es wünschenswert, die Ausleuchtung einer gegebenen Fläche bzw. eines gegebenen Raumbereichs verändern zu können. Bei einer konventionellen Stirnleuchte mit einer Glühbirne kann dazu beispielsweise das von der Glühbirne abgegebene Licht dadurch fokussiert werden, dass ein relativ zu der Glühbirne verschiebbarer, die Glühbirne umgebender Reflektor mit fokussierenden Eigenschaften verwendet wird.

Solche mobilen Leuchten weisen jedoch eine Reihe von Nachteilen auf. Zum einen verbrauchen Glühbirnen sehr viel Strom, so dass entweder eine große und schwere Stromversorgung, beispielsweise durch Batterien notwendig ist oder entsprechende Leuchten nur eine kurze Betriebsdauer aufweisen. Zum anderen erfordert eine verstellbare Fokussierung des abgegebenen Lichts eine vergleichsweise aufwendige bewegliche Führung des Reflektors.

Der vorliegenden Erfindung liegt daher die Aufgabe zugrunde, eine einfach aufgebaute mobile Leuchte bereitzustellen, deren Abstrahlcharakteristik zur Ausleuchtung einer gegebenen Fläche oder eines gegebenen Raumbereichs veränderbar ist.

Die Aufgabe wird gelöst durch eine mobile Leuchte mit den Merkmalen des Anspruchs 1.

Die erfindungsgemäße mobile Leuchte umfasst eine erste Leuchtanordnung, die ein erstes Leuchtdiodenelement und eine diesem zugeordnete erste abbildende Einrichtung zur Bündelung oder Aufweitung eines von dem ersten Leuchtdiodenelement gegebenen ersten Lichtbündels oder mehrere erste Leuchtdiodenelemente und diesen jeweils zugeordnete erste abbildende Einrichtungen zur Bündelung oder Aufweitung von von den ersten Leuchtdiodenelementen abgegebenen ersten Lichtbündeln aufweist, eine zweite Leuchtanordnung, die ein zweites Leuchtdiodenelement und eine diesem zugeordnete zweite abbildende Einrichtung zur Bündelung oder Aufweitung eines von dem zweiten Leuchtdiodenelement abgegebenen zweiten Lichtbündels oder mehrere zweite Leuchtdiodenelemente und diesen jeweils zugeordnete zweite abbildende Einrichtungen zur Bündelung oder Aufweitung von von den zweiten Leuchtdiodenelementen jeweils abgegebenen zweiten Lichtbündeln aufweist, wobei das zweite Lichtbündel bzw. die zweiten Lichtbündel stärker als das erste Lichtbündel bzw. die ersten Lichtbündel gebündelt ist bzw. sind, und eine Schaltvorrichtung, mittels derer das Leuchtdiodenelement bzw. die Leuchtdiodenelemente einer der Leuchtanordnungen getrennt von dem Leuchtdiodenelement bzw. den Leuchtdiodenelementen der anderen Leuchtanordnung ein- und ausschaltbar sind.

Unter einer mobilen Leuchte wird dabei eine Leuchte verstanden, die tragoder fahrbar ist und während des Betriebs keinen Anschluss an ein ortsfest installiertes Stromnetz benötigt.

Die beiden Leuchtanordnungen dienen zur Abgabe von Licht, wozu sie jeweils wenigstens ein Leuchtdiodenelement und eine diesem zugeordnete abbildende Einrichtung aufweisen. Bei den Leuchtdiodenelementen kann es sich grundsätzlich um beliebige Leuchtdioden, insbesondere auch um Leuchtdioden mit einem integrierten, der Sammlung des von der Sammlung der Leuchtdiode abgegebenen Lichts dienenden Leuchtkörper, insbesondere aus Glas, handeln.

Um Lichtbündel mit einer geeigneten Bündelung abgeben zu können, ist jedem der Leuchtdiodenelemente eine abbildende Einrichtung zugeordnet, die der Bündelung oder Aufweitung eines von dem jeweiligen Leuchtdiodenelement abgegebenen Lichtbündels dient. Sie können dazu, je nach Anforderung, reelle oder virtuelle Bilder der Leuchtdiodenelemente erzeugen. Die abbildenden Einrichtungen für verschiedene Leuchtdiodenelemente können dabei räumlich voneinander getrennt oder durch verschiedene Abschnitte von optischen Komponenten gegeben sein, auf die jeweils nur ein Lichtbündel eines Leuchtdiodenelements fällt.

Die Leuchtdiodenelemente und die entsprechenden abbildenden Einrichtungen der ersten und zweiten Leuchtanordnung sind so gestaltet, dass bei Verwendung nur eines zweiten Leuchtdiodenelements das zweite Lichtbündel, bei Verwendung mehrerer zweiter Leuchtdiodenelemente, mehrere zweite Lichtbündel nach Abbildung durch die abbildende Einrichtung stärker gebündelt ist bzw. sind als das erste Lichtbündel bzw. die ersten Lichtbündel nach Passieren der ersten abbildenden Einrichtung. Das bedeutet, dass eine Querschnittsfläche des ersten Lichtbündels bzw. der ersten Lichtbündel in einer vorgegebenen Entfernung von der Leuchte größer ist als eine Querschnittsfläche des zweiten Lichtbündels bzw. der zweiten Lichtbündel in der vorgegebenen Entfernung. Bei konischen Lichtbündeln ist dann der Öffnungswinkel der zweiten Lichtbündel kleiner als der der ersten Lichtbündel.

Auf diese Weise sind mit den ersten und zweiten Leuchtanordnungen unterschiedlich stark gebündelte Lichtbündel abgebbar.

Zum Ein- und Ausschalten der Leuchtdiodenelemente der Leuchtanordnungen ist eine Schaltvorrichtung vorgesehen, mittels derer das Leuchtdiodenelement bzw. die Leuchtdiodenelemente einer der Leuchtanordnungen getrennt von dem Leuchtdiodenelement bzw. den Leuchtdiodenelementen der anderen Leuchtanordnung ein- und ausschaltbar sind. Dies bedeutet, dass die beiden Leuchtanordnungen gemeinsam ausgeschaltet und wenigstens alternativ ein- und ausgeschaltet werden können. Vorzugsweise ist als weitere Betriebsart zusätzlich das Einschalten beider Leuchtanordnungen vorgesehen.

Auf diese Weise kann die Bündelung bzw. Fokussierung des mit der mobilen Leuchte abgebbaren Lichts durch Umschalten zwischen den beiden Leuchtanordnungen sehr einfach geändert werden. Insbesondere ist es möglich, in Abhängigkeit von einer gegebenen Situation eine angepasste Beleuchtung zu wählen. Ein vorgegebener Raumbereich oder eine vorgegebene Fläche kann damit je nach Bedürfnissen besonders effektiv ausgeleuchtet werden, während möglichst wenig Licht in angrenzende, nicht zu beleuchtende Bereiche gelenkt wird. Eine verstellbare Fokussierungseinrichtung ist daher nicht notwendig, so dass die mobile Leuchte nicht nur einfach herstellbar, sondern auch in der Handhabung sehr robust ist.

Durch die Verwendung von Leuchtdiodenelementen als Leuchtmittel ist es darüber hinaus zum einen möglich, bei einer vorgegebenen Energieaufnahme eine im Vergleich zu Glüh- oder Halogenbirnen wesentlich größere Lichtausbeute zu erzielen, so dass beispielsweise bei Betrieb mit einer Batterie oder einem Akku eine entweder wesentlich größere Lichtstärke oder eine wesentlich längere Leuchtdauer erzielbar ist. Zum anderen sind Leuchtdiodenelemente wesentlich langlebiger und weniger empfindlich gegen Erschütterungen als Glüh- oder Halogenbirnen.

Weiterbildungen und bevorzugte Ausführungsformen der Erfindung sind in der Beschreibung, den Ansprüchen und den Zeichnungen beschrieben.

Grundsätzlich können die Leuchtdiodenelemente der ersten bzw. zweiten Leuchtanordnung beliebig angeordnet sein. Es ist jedoch bevorzugt, dass eine der beiden Leuchtanordnungen wenigstens drei Leuchtdiodenelemente und diesen jeweils zugeordnete abbildende Einrichtungen aufweist, und dass die Leuchtdiodenelemente so angeordnet sind, dass sie das Leuchtdiodenelement bzw. die Leuchtdiodenelemente der anderen Leuchtanordnung in einer Ebene, in der die Leuchtdiodenelemente der einen Leuchtanordnung angeordnet sind, umgeben. Es ergibt sich so eine besonders kompakte Anordnung der Leuchtdiodenelemente, bei der insbesondere die Abstrahlrichtungen der von den beiden Leuchtanordnungen abgegebenen Lichtbündel in im Wesentlichen gleichen Richtungen verlaufen können, so dass ein Benutzer bei Umschalten der Fokussierung, d.h. zwischen den beiden Leuchtanordnungen, kein Springen des durch die Lichtbündel der Leuchtdiodenelemente gebildeten Gesamtlichtbündels wahrnimmt. Vorzugsweise umgeben die Leuchtdiodenelemente der zweiten Leuchtanordnung die Leuchtdiodenelemente der ersten Leuchtanordnung.

Um zum einen eine besonders gleichmäßige Ausleuchtung und zum anderen eine besonders kompakte Anordnung zu ermöglichen, ist es bevorzugt, dass die Leuchtdiodenelemente der einen Leuchtanordnung, die das Leuchtdiodenelement bzw. die Leuchtdiodenelemente der anderen Leuchtanordnung umgeben, im Wesentlichen entlang eines Kreises oder einer Ellipse angeordnet sind. Besonders bevorzugt weisen dabei jeweils zwei aufeinander folgende Leuchtdiodenelemente gleiche räumliche oder Winkelabstände voneinander auf. Bei Anordnung entlang eines Kreises und in gleichen Winkelabständen können die Leuchtdiodenelemente dann auf den Eckpunkten regelmäßiger Vielecke, beispielsweise von gleichseitige Dreiecken, Quadraten, gleichseitigen Fünfecken oder gleichseitigen Sechsecken, angeordnet sein.

Um zum einen eine besonders einfache Fertigung und zum anderen eine möglichst gleichmäßige Ausleuchtung zu erzielen, ist es bevorzugt, dass die Leuchtdiodenelemente und die diesen zugeordneten abbildenden Einrichtungen wenigstens einer der Leuchtanordnungen so ausgebildet sind, dass die von der Leuchtanordnung abgegebenen Lichtbündel im Wesentlichen gleich stark gebündelt sind. Vorzugsweise sind die Leuchtdiodenelemente und die zugeordneten abbildenden Einrichtungen von beiden Leuchtanordnungen so ausgebildet, dass deren Lichtbündel jeweils im Wesentlichen gleich stark gebündelt sind. Auf diese Weise wird eine gleichmäßigere Beleuchtung bei allen Betriebsarten erzielt.

Grundsätzlich können die abbildenden Einrichtungen beliebig ausgebildet sein. Insbesondere können sie durch Teilabschnitte von optischen Bauelementen gegeben sein, die nur von einem Lichtbündel bestrahlt werden. Dabei können grundsätzlich auch Reflektoren Verwendung finden, beispielsweise entsprechende Parabolspiegel. Es ist jedoch bevorzugt, dass wenigstens eine abbildende Einrichtung der ersten und/oder zweiten Leuchtanordnung eine Linse umfasst, die vorzugsweise von dem jeweiligen Leuchtdiodenelement beabstandet angeordnet ist. Besonders bevorzugt werden alle abbildenden Einrichtungen der ersten und/oder zweiten Leuchtanordnung durch eine Linse gebildet. Solche Anordnungen sind besonders einfach herstellbar, insbesondere können hier Kunststofflinsen Verwendung finden. Darüber hinaus beanspruchen Linsen nur sehr wenig Platz, so dass sich eine entsprechend kompakte Leuchte ergibt. Die Stärke der Aufweitung bzw. Bündelung der Lichtbündel kann dabei durch die Wahl des Abstands zwischen den Leuchtdiodenelementen und den Linsen und/oder vorzugsweise die Wahl der Form und/oder Brennweiten der Linsen beeinflusst werden.

Im Hinblick auf die Herstellung wie auch die Ausrichtung der abbildenden Einrichtung auf die entsprechenden Leuchtdiodenelemente ist es bevorzugt, dass die abbildenden Einrichtungen der beiden Leuchtanordnungen in einem Bauteil einstückig ausgebildet sind. Insbesondere können als abbildende Einrichtungen Linsen in einer durch Spritzguss aus einem hochtransparenten Kunststoff hergestellten Platte ausgebildet sein, die dann als Ganze vor den Leuchtanordnungen angebracht wird.

Die Lichtbündel der Leuchtdiodenelemente der Leuchtanordnungen bilden jeweils Gesamtlichtbündel der entsprechenden Leuchtanordnungen, denen durch entsprechende Mittelung über die Richtungen der insgesamt von der jeweiligen Leuchtanordnung abgegebenen Lichtstrahlen eine Gesamtabstrahlrichtung zugeordnet werden kann. Grundsätzlich können diese Gesamtabstrahlrichtungen beliebig zueinander ausgerichtet sein. Es ist jedoch bevorzugt, dass die erste und die zweite Leuchtanordnung jeweils gleiche Gesamtabstrahlrichtungen aufweisen. Auf diese Weise wird bei einem Umschalten zwischen den beiden Leuchtanordnungen ein Springen des Lichtstrahls zwischen verschiedenen Raumbereichen vermieden. Darüber hinaus können sich bei gemeinsamem Einschalten der beiden Leuchtanordnungen die abgegebenen Gesamtlichtbündel überlagern und so zu einer besonders starken Beleuchtung einer vorgegebenen Fläche verwendet werden.

Die Leuchtdiodenelemente geben jeweils ein Lichtbündel ab, dem durch Mittelung über die darin enthaltenen Lichtstrahlen einer Hauptabstrahlrichtung zugeordnet werden kann. Diese Hauptabstrahlrichtungen können grundsätzlich für Leuchtdiodenelemente einer der Leuchtanordnungen beliebig, beispielsweise parallel ausgerichtet sein. Um jedoch eine große Beleuchtungsstärke in vorgegebenen Entfernungen von der Leuchte zu ermöglichen, ist es bevorzugt, dass die Hauptabstrahlrichtungen der Leuchtdiodenelemente und/oder die optischen Achsen der abbildenden Einrichtungen der ersten und/oder der zweiten Leuchtanordnung in ersten und/oder zweiten spitzen Neigungswinkeln geneigt zu einer Gesamtabstrahlrichtung der jeweiligen Leuchtanordnung verlaufen. Wegen der einfacheren Herstellung und Justierung ist es dabei besonders bevorzugt, dass die optischen Achsen der abbildenden Einrichtungen geneigt zu der jeweiligen Gesamtabstrahlrichtung verlaufen. Die Lichtbündel können sich dann in einer durch die Neigungswinkel bestimmten Entfernung von der Leucht überlappen und ermöglichen fort eine besonders starke Beleuchtung.

Dabei ist es, insbesondere bei einer im Wesentlichen kreisförmigen Anordnung der Leuchtdiodenelemente, besonders bevorzugt, dass die Neigungswinkel innerhalb wenigstens einer der Leuchtanordnungen gleich groß sind. Die optischen Achsen der abbildenden Einrichtungen schneiden sich dann im Wesentlichen in einem Punkt, so dass sich die von den entsprechenden Leuchtdiodenelementen abgegebenen Lichtbündel in einer diesen Punkt enthaltenden zu der Gesamtabstrahlrichtung im Wesentlichen orthogonalen Ebene schneiden bzw. überlappen können und so eine besonders große Leuchtstärke im Überlappungsbereich ermöglichen.

Bei einer Ausführungsform ist es bevorzugt, dass die zweiten Neigungswinkel kleiner als die ersten Neigungswinkel sind. Es ergibt sich dann, insbesondere wenn die Leuchtdiodenelemente der zweiten Leuchtanordnung die Leuchtdiodenelemente der ersten Leuchtanordnung umgeben, eine im Wesentlichen vollständige Überlappung der Querschnitte der Lichtbündel der zweiten Leuchtanordnung in einer Entfernung, die größer ist als die Entfernung, in der sich die Querschnitte der Lichtbündel der ersten Leuchtanordnung überlappen. Das stärker gebündelte Licht der zweiten Leuchtanordnung kann daher als Fernlicht verwendet werden, während die Lichtbündel der ersten Leuchteinheit für den Nahbereich eine günstige Beleuchtung darstellen.

Weiter ist es bevorzugt, dass sich die ersten und zweiten Lichtbündel in einer vorgegebenen Entfernung von den Leuchtanordnungen wenigstens teilweise innerhalb eines Kreises mit einem Durchmesser von 0,5 m bis 2 m, vorzugsweise von 1 m überlappen. Die vorgegebene Entfernung liegt dabei vorzugsweise zwischen 0,5 m und 3 m. Ab diesem Bereich nimmt der Benutzer dann einen zusammenhängenden Lichtfleck wahr, der durch die ersten bzw. zweiten Lichtbündel gebildet wird und zur zusammenhängenden Beleuchtung einer Fläche geeignet ist.

Um für einen Betrachter eine möglichst angenehme Beleuchtung zu ermöglichen und insbesondere auch die Erkennung von Farben zu erleichtern, ist es bevorzugt, dass die Leuchtdiodenelemente wenigstens einer Leuchtanordnung zur Abgabe von im Wesentlichen weißem Licht ausgebildet sind. Vorzugsweise sind alle verwendeten Leuchtdiodenelemente zur Abgabe von im Wesentlichen weißem Licht geeignet.

Weiterhin ist es bevorzugt, dass bei der Verwendung von Linsen als abbildende Einrichtungen zwischen den Linsen und den Leuchtdiodenelementen Tuben angeordnet sind, durch jeweils Licht eines Leuchtdiodenelements zu der entsprechenden Linse führbar ist, die aber eine Streuung von Licht eines Leuchtdiodenelements in den Bereich einer Linse, die einem anderen Leuchtdiodenelement zugeordnet ist, verhindern. Auf diese Weise wird ein besonders gut abgegrenztes Lichtbündel erzielt. Soll dabei möglichst wenig Licht verloren gehen, ist es besonders bevorzugt, dass die Tuben eine für Licht der Leuchtdiodenelemente hoch reflektierende innere Oberfläche aufweisen. Alternativ kann für jedes Leuchtdiodenelement ein sich in Abstrahlrichtung des Leuchtdiodenelements öffnender Reflektor vorgesehen sein, mittels dessen von dem Leuchtdiodenelement abgegebenes Licht bündelbar ist. Insbesondere kann ein solcher Reflektor zusätzlich zu einer Linse verwendet werden. Um eine besonders scharfe Abgrenzung des Lichtbündels zu erreichen, ist es demgegenüber besonders bevorzugt, dass die Tuben eine für Licht der Leuchtdiodenelemente nur wenig oder nicht reflektierende Oberfläche aufweisen, die insbesondere schwarz und/oder mattiert sein kann.

Die erfindungsgemäße mobile Leuchte kann für verschiedenste Einsatzzwecke ausgebildet sein. Bei einer bevorzugten Weiterbildung ist es vorgesehen, dass die Leuchte als Fahrzeugleuchte, insbesondere als Fahrradleuchte, ausgebildet ist. Insbesondere kann sie an einem Fahrrad als Frontleuchte verwendet werden, wobei die zweite Leuchtanordnung zur Bereitstellung von Fernlicht, das in einer Entfernung von etwa 8 bis 10 m stark gebündelt vor der Leuchte auf die Fahrbahn trifft, und die erste Leuchtanordnung zur Bereitstellung von Standlicht, das mit einem möglichst großen Öffnungswinkel abgestrahlt wird, dienen kann. Die erfindungsgemäße Leuchte kann dabei entsprechende Befestigungsmittel zur Befestigung der Leuchte an einem Fahrrad aufweisen.

Bei einer anderen bevorzugten Weiterbildung ist es vorgesehen, dass die Leuchte als Hand- oder Taschenleuchte ausgebildet ist. Sie kann dazu insbesondere einen entsprechenden Griff aufweisen. Eine so ausgebildete mobile Leuchte erlaubt es einem Benutzer in einfacher Weise in sehr unterschiedlichen Situationen eine gute Ausleuchtung eines zu beobachtenden Bereichs zu erreichen.

Bei einer anderen bevorzugten Weiterbildung ist es vorgesehen, dass die Leuchte als Stirnleuchte ausgebildet ist. Sie eignet sich dann besonders als Beleuchtung in der Dunkelheit, wenn ein Benutzer alternativ Licht im Bereich der Hände oder Licht in der Ferne benötigt, wie es beispielsweise beim Camping der Fall ist. Insbesondere kann sie dazu ein elastisches Kopfband aufweisen, mittels dessen sie an einem Kopf eines Benutzers befestigbar ist.

Die erfindungsgemäße Leuchte kann auf verschiedene Art und Weise mit Strom versorgt werden. Insbesondere bei Ausbildung als Hand- oder Taschenleuchte oder als Stirnleuchte ist es bevorzugt, dass die Leuchtanordnungen in einem Gehäuse angeordnet sind, in dem ein Batteriefach vorgesehen ist. Es ergibt sich so eine einfache, kompakte und einfach zu transportierende Leuchte.

Nach einer anderen Weiterbildung ist es, insbesondere bei einer Ausbildung als Stirnleuchte, bevorzugt, dass die Leuchtanordnungen in einem Gehäuse an einem elastischen Band gehalten sind, und dass an dem Band ein Batteriebehälter gehalten ist. In dem Batteriebehälter können Batterien oder Akkus eingesetzt werden, die zur Speisung der Leuchtdiodenelemente in den Leuchtanordnungen dienen. Dadurch kann das Gehäuse mit den Leuchtanordnungen besonders klein und leicht gehalten werden, so dass auch bei schnellen Bewegungen nur vergleichsweise kleine Trägheitskräfte wirken und das Gehäuse mit den Leuchtanordnungen so schnell schwenkbar ist.

Die Erfindung wird nun weiter beispielhaft anhand der Zeichnungen erläutert. Es zeigen:
- Fig. 1: eine seitliche Schnittansicht durch eine mobile Leuchte nach einer bevorzugten Ausführungsform der Erfindung in Form einer Taschenleuchte,
- Fig. 2: eine Draufsicht auf einen Kopfteil der mobilen Leuchte in Fig. 1,
- Fig. 3: eine schematische, teilweise Schnittansicht durch den Kopfteil in den Fig. 1 und 2 zusammen mit einer schematischen Darstellung von durch erste und zweite Leuchtanordnungen der mobilen Leuchte in Fig. 1 abgegebenen Lichtbündeln,
- Fig. 4: die Darstellung in Fig. 3, wobei jedoch nur Lichtbündel der ersten Leuchtanordnung gezeigt sind, und
- Fig. 5: die Darstellung in Fig. 3, wobei nun aber nur die Lichtbündel der zweiten Leuchtanordnung gezeigt sind.

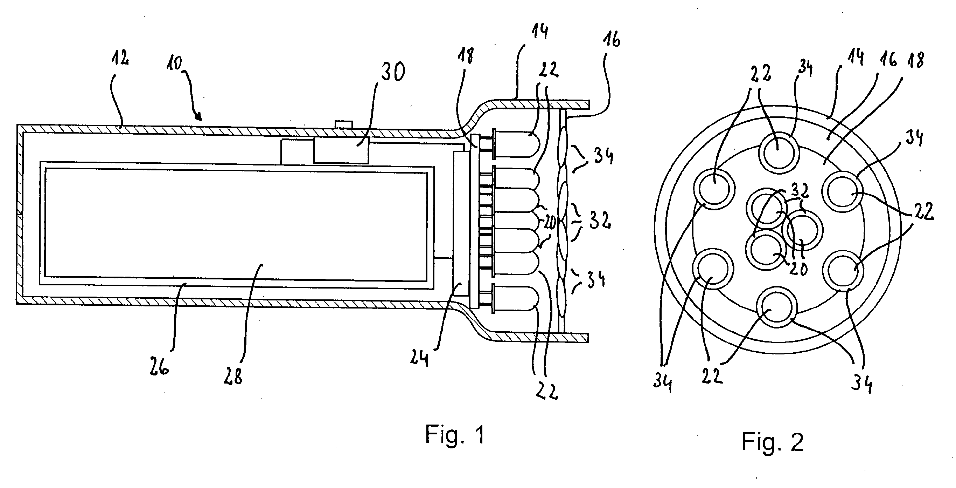

In Fig. 1 umfasst eine Taschenleuchte in einem Gehäuse 10 mit einem Griffteil 12 und einem Kopfteil 14 hinter einer Stirnscheibe 16 auf einem Träger 18 erste und zweite Leuchtdiodenelemente 20 bzw. 22, eine Versorgungsschaltung 24 zur Versorgung der ersten und zweiten Leuchtdiodenelemente 20 bzw. 22 mit Strom. In einem Batteriefach 26 in dem Griffteil 12 ist eine Batterie 28 zur Versorgung der Versorgungsschaltung 24 angeordnet. Kontaktelemente in dem Batteriefach 26 sind zum einen direkt und zum anderen über einen in dem Griffteil 12 gehaltenen Tastschalter 30 mit der Versorgungsschaltung 24 verbunden.

Bei den Leuchtdiodenelementen 20 und 22 handelt es sich um Weißlicht-Leuchtdioden mit einem Glaskörper, der dazu dient, von der Diode abgegebenes Licht zu sammeln.

Wie in Fig. 2 gezeigt, sind auf dem kreisförmigen Träger 18 drei erste Leuchtdiodenelemente 20 auf den Ecken eines gleichseitigen Dreiecks zu dem Mittelpunkt des Trägers 18 zentriert angeordnet. Um diese Anordnung von ersten Leuchtdioden 20 herum sind auf einem Kreis in gleichen Winkelabständen voneinander bzw. auf den Ecken eines regelmäßigen Sechsecks sechs zweite Leuchtdioden 22 angeordnet, so dass diese die Gruppe von ersten Leuchtdioden 20 kreisförmig umgeben.

Die Leuchtdioden 20 und 22 sind mit ihrer Hauptabstrahlrichtung, die sich durch Mittelung über alle von ihnen abgegebenen Lichtstrahlen ergibt, parallel zueinander und parallel zu einer Normalen auf die Fläche des Trägers durch dessen Mittelpunkt ausgerichtet.

Die Leuchtdioden 20 und 22 sind über Leiterbahnen auf dem als Platine ausgebildeten Träger 18 mit der Versorgungsschaltung 24 verbunden. Die Versorgungsschaltung 24 ist so ausgebildet, dass die ersten Leuchtdioden 20 bzw. die zweiten Leuchtdioden 22 jeweils als Teil einer ersten bzw. zweiten Leuchtanordnung gemeinsam ein- und ausschaltbar sind. Zum Ein- und Ausschalten dient der Tastschalter 30 in Verbindung mit der Versorgungsschaltung 24. Durch wiederholtes Drücken des Tastschalters können die Leuchtdioden in vier verschiedene Zustände gebracht werden. In einem ersten Zustand sind nur die ersten Leuchtdioden 20, d.h. die erste Leuchtanordnung 20, eingeschaltet, während die zweiten Leuchtdioden 22 ausgeschaltet sind, in einem zweiten Zustand sind nur die zweiten Leuchtdioden 22 und in einem dritten Zustand sind alle Leuchtdioden eingeschaltet. In einem vierten Zustand schließlich sind alle Leuchtdioden ausgeschaltet. Die Versorgungsschaltung 24 zusammen mit dem Tastschalter 30 bildet daher eine Schalteinrichtung zum Ein- und Ausschalten der Leuchtdiodenelemente im Sinne der Erfindung.

In der Stirnscheibe 16 sind, jeweils auf die ersten bzw. zweiten Leuchtdiodenelemente 20 bzw. 22 ausgerichtet, als den ersten Leuchtdiodenelementen 20 jeweils zugeordnete erste abbildende Einrichtungen erste Linsen 32 und als den zweiten Leuchtdioden 22 jeweils zugeordnete zweite abbildende Einrichtungen zweite Linsen 34 ausgebildet. Die Stirnscheibe 16 ist dabei als Spritzgussteil aus einem hochtransparentem Kunststoff, beispielsweise Polycarbonat, ausgeführt.

Die ersten und zweiten Linsen 32 und 34 sind jeweils auf entsprechende erste und zweite Leuchtdiodenelemente 20 bzw. 22 ausgerichtet, so dass die ersten Linsen 32 und die ersten Leuchtdiodenelemente 20 eine erste Leuchtanordnung und die zweiten Linsen 34 und die zweiten Leuchtdiodenelemente 22 eine zweite Leuchtanordnung bilden.

Die Stirnscheibe 16 ist dazu, wie der Träger 18 auch durch entsprechende Positioniermittel in dem Kopfteil 14 mit den ersten und zweiten Linsen 32 bzw. 34 auf die entsprechenden ersten bzw. zweiten Leuchtdiodenelemente 20 bzw. 22 ausgerichtet gehalten.

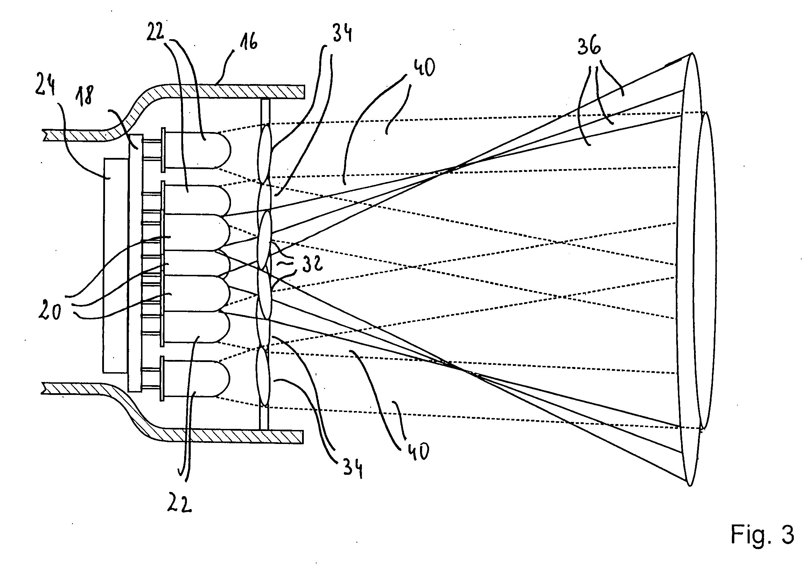

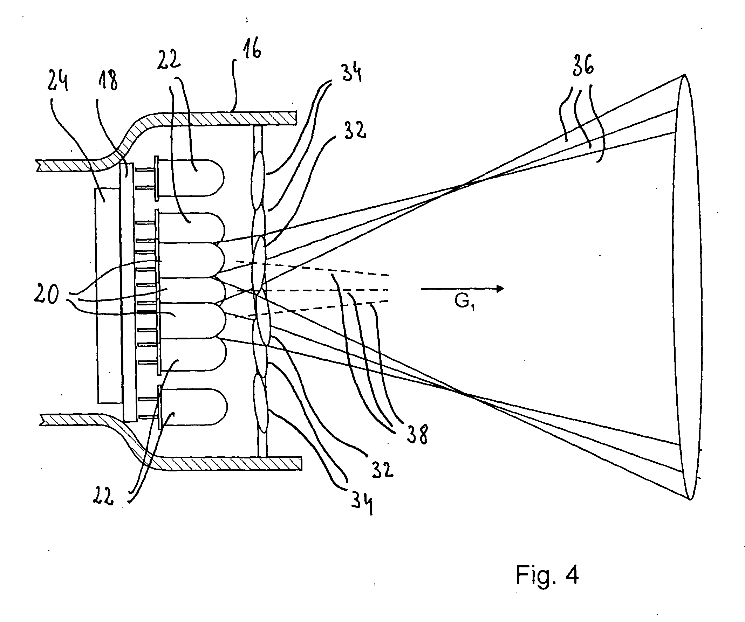

Die Brennweite der gleich ausgebildeten ersten Linsen 32 und deren Lagen zu den jeweiligen ersten Leuchtdiodenelementen 20 sind so gewählt, dass die ersten Linsen 32 die von den ersten Leuchtdiodenelementen 20 abgegebenen ersten Lichtbündel 36 aufweiten (vgl. Fig. 3 und 4).

Die optischen Achsen 38 der ersten abbildenden Einrichtungen bzw. Linsen 32 sind gegenüber einer durch den Mittelpunkt des Trägers 18 führenden Normalen auf den Träger 18 in einem spitzen ersten Neigungswinkel geneigt, so dass sich zum einen die optischen Achsen 38 im Wesentlichen in einem Punkt auf der Normalen schneiden und zum anderen die von den ersten Linsen 32 aufgeweiteten ersten Lichtbündel 36 in einer Entfernung von etwa 1 m vollständig überlappen. Dabei wird in dieser Entfernung eine in etwa kreisförmige Fläche mit einem Durchmesser von etwa 1 m ausgeleuchtet. Dies ist in den Fig. 3 und 4 nur stark schematisch und nicht maßstabsgerecht gezeigt.

Bei einer Mittelung über die Richtungen aller Lichtstrahlen der ersten Lichtbündel 36 ergibt sich eine mit der Normalen durch den Mittelpunkt des Trägers 18 koaxial verlaufende Gesamtabstrahlrichtung G₁ der durch die ersten Leuchtdiodenelemente 20 und die ersten Linsen 32 gebildeten ersten Leuchtanordnung.

Die den zweiten Leuchtdiodenelementen 22 zugeordneten Linsen 34 bilden mit diesen eine zweite Leuchtanordnung.

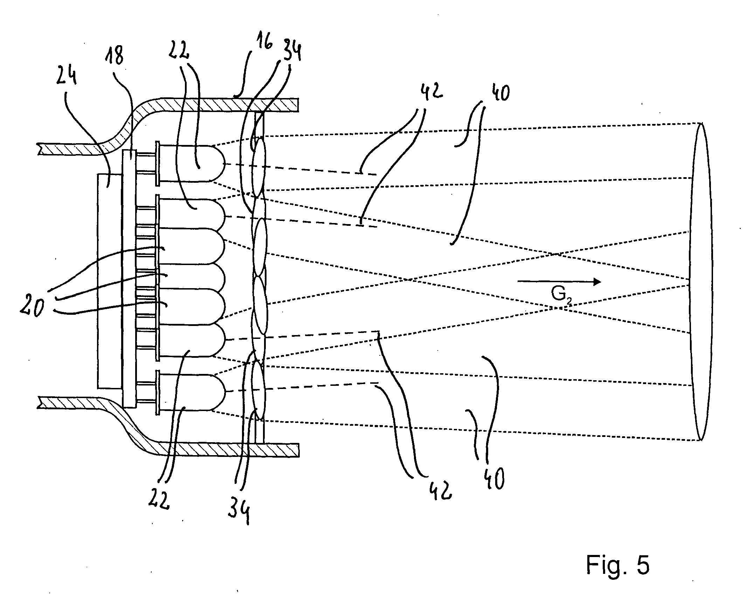

Die Brennweite der gleich ausgebildeten zweiten Linsen 34 und deren Lagen zu den jeweiligen zweiten Leuchtdiodenelementen 22 sind so gewählt, dass die zweiten Lichtbündel 40 der zweiten Leuchtdiodenelemente 22 durch die zweiten Linsen 34 nicht auf geweitet, sondern etwas gebündelt werden (vgl. Fig. 3 und 5).

Die optischen Achsen 42 der zweiten abbildenden Einrichtungen bzw. zweiten Linsen 34 sind in einem spitzen zweiten Neigungswinkel auf die Normale auf den Träger 18 durch dessen Mittelpunkt zu geneigt, so dass diese sich in einem Punkt auf der Normalen schneiden. Da die zweiten Neigungswinkel kleiner als die ersten Neigungswinkel sind, liegt der Schnittpunkt der optischen Achsen 42 der zweiten Linsen 34 weiter von der Stirnscheibe 16 entfernt als der entsprechende Schnittpunkt der optischen Achse 38 der ersten Linsen 32. Die von den zweiten Linsen 34 gebündelten zweiten Lichtbündel 40 überlappen sich daher in einer Entfernung von etwa 8 m vollständig, so dass in dieser Entfernung eine in etwa kreisförmige Fläche mit einem Durchmesser von etwa 2 m ausgeleuchtet wird. Dies ist in den Fig. 3 und 5 nur stark schematisch und nicht maßstabsgerecht gezeigt.

Die Gesamtabstrahlrichtung G₂ der zweiten Leuchtanordnung, die sich wie bei der ersten Leuchtanordnung durch Mittelung über die Richtung der Lichtstrahlen der zweiten Lichtbündel 40 im Strahlengang hinter den zweiten Linsen 34 ergibt, verläuft daher koaxial mit der Gesamtabstrahlrichtung G₁ der ersten Leuchtanordnung und damit der Normalen auf den Träger 18 durch dessen Mittelpunkt.

Die ersten und zweiten Lichtbündel 36 bzw. 40 überlappen sich in einer Entfernung 2m von den Leuchtanordnungen wenigstens teilweise innerhalb eines Kreises mit einem Durchmesser 1,5 m.

Ein Benutzer der Taschenleuchte kann nun durch Betätigung des Tastschalters 30 unterschiedlich fokussiertes Licht erzeugen. In dem ersten Zustand sind nur die ersten Leuchtdiodenelemente 20 der ersten Leuchtanordnung eingeschaltet, so dass sich ein aus den ersten Lichtbündeln 38 ergebendes, stark divergentes Gesamtlichtbündel ergibt, das in einem Nahbereich einen scharf abgegrenzten in etwa kreisrunden Lichtfleck erzeugt (vgl. Fig. 4).

In dem zweiten Zustand sind nur die zweiten Leuchtdiodenelemente 22 eingeschaltet, die nun stärker gebündelte zweite Lichtbündel 40 abstrahlen, die sich erst in einer größeren Entfernung zu einem in etwa kreisförmigen Lichtfleck überlagern und daher als Fernlicht geeignet sind.

In dem dritten Zustand sind alle Leuchtdiodenelemente eingeschaltet, so dass gleichzeitig sowohl für den Nahbereich ein weit aufgefächertes Lichtbündel als auch für den Fernbereich ein stärker fokussiertes Lichtbündel abgestrahlt wird. Dadurch, dass in dieser Ausführungsform die Anzahl der zweiten Leuchtdiodenelemente 22 zur Beleuchtung des Fernbereichs größer ist als die Anzahl der ersten Leuchtdiodenelemente 20 zur Beleuchtung eines Nahbereichs, ergibt sich auch im Fernbereich eine nur geringe Abschwächung der Leuchtstärke des abgegebenen Gesamtlichtbündels, d.h. der entsprechenden Intensität.

Bei einer anderen bevorzugten Ausführungsform der Erfindung sind die spitzen ersten und zweiten Neigungswinkel der Linsen 32 bzw. 34 gleich groß gewählt, so dass sich die entsprechenden ersten und zweiten Lichtbündel in der in etwa gleichen Entfernung von 1 m von der Stirnscheibe 16 im Wesentlichen kreisförmig in einem Kreis mit etwa 1 m Durchmesser überlagern, so dass bei gemeinsamem Betrieb aller Leuchtdiodenelemente in dieser Entfernung innerhalb des Kreises eine besonders große Beleuchtungsstärke erzielt werden kann.

Bei einer noch weiteren Ausführungsform sind die ersten und zweiten Leuchtdiodenelemente 20 bzw. 22 jeweils in innen mattierten Tuben gehalten, die sich von dem Träger 18 bis zu den den jeweiligen Leuchtdiodenelementen zugeordneten Linsen erstrecken und so ein Eindringen von Streulicht benachbarter Leuchtdiodenelemente in die einer Leuchtdiode zugeordnete Linse verhindern.

### Bezugszeichenliste

- 10: Gehäuse
- 12: Griffteil
- 14: Kopfteil
- 16: Stirnscheibe
- 18: Träger
- 20: erste Leuchtdioden
- 22: zweite Leuchtdioden
- 24: Versorgungsschaltung
- 26: Batteriefach
- 28: Batterie
- 30: Tastschalter
- 32: erste Linsen
- 34: zweite Linsen
- 36: erste Lichtbündel
- 38: optische Achsen
- 40: zweite Lichtbündel
- 42: optische Achsen

- G₁: Gesamtabstrahlrichtung
- G₂: Gesamtabstrahlrichtung

## Patentansprüche

1. Mobile Leuchte mit
einer ersten Leuchtanordnung, die ein erstes Leuchtdiodenelement (20) und eine diesem zugeordnete erste abbildende Einrichtung (32) zur Bündelung oder Aufweitung eines von dem ersten Leuchtdiodenelement (20) abgegebenen ersten Lichtbündels (36) oder mehrere erste Leuchtdiodenelemente (20) und diesen jeweils zugeordnete erste abbildende Einrichtungen (32) zur Bündelung oder Aufweitung von von den ersten Leuchtdiodenelementen (20) abgegebenen ersten Lichtbündeln (36) aufweist,
einer zweiten Leuchtanordnung, die ein zweites Leuchtdiodenelement (22) und eine diesem zugeordnete zweite abbildende Einrichtung (34) zur Änderung Bündelung oder Aufweitung eines von dem zweite Leuchtdiodenelement (22) abgegebenen zweiten Lichtbündels (40) oder mehrere zweite Leuchtdiodenelemente (22) und diesen jeweils zugeordnete zweite abbildende Einrichtungen (34) zur Bündelung oder Aufweitung von von den zweiten Leuchtdiodenelementen (22) jeweils abgegebenen zweiten Lichtbündeln (40) aufweist, wobei das zweite Lichtbündel (40) bzw. die zweiten Lichtbündel (40) stärker als das erste Lichtbündel (36) bzw. die ersten Lichtbündel (36) gebündelt ist bzw. sind, und
einer Schaltvorrichtung (24, 30) mittels derer das Leuchtdiodenelement (20, 22) bzw. die Leuchtdiodenelemente (20, 22) einer der Leuchtanordnungen getrennt von dem Leuchtdiodenelement (20, 22) bzw. den Leuchtdiodenelementen (20, 22) der anderen Leuchtanordnung ein- und ausschaltbar sind.

2. Mobile Leuchte nach Anspruch 1,
**dadurch gekennzeichnet**,
eine der beiden Leuchtanordnungen wenigstens drei Leuchtdiodenelemente (22) und diesen jeweils zugeordnete abbildende Einrichtungen (34) aufweist, und
dass die Leuchtdiodenelemente (22) so angeordnet sind, dass sie das Leuchtdiodenelement (20) bzw. die Leuchtdiodenelemente (20) der anderen Leuchtanordnung in einer Ebene, in der die Leuchtdiodenelemente (22) der einen Leuchtanordnung angeordnet sind, umgeben.

3. Mobile Leuchte nach Anspruch 2,
**dadurch gekennzeichnet,**
**dass** die Leuchtdiodenelemente (22) der einen Leuchtanordnung, die das Leuchtdiodenelement (20) bzw. die Leuchtdiodenelemente (20) der anderen Leuchtanordnung umgeben, im Wesentlichen entlang eines Kreises oder einer Ellipse angeordnet sind.

4. Mobile Leuchte nach einem der vorhergehenden Ansprüche,
**dadurch gekennzeichnet**,
die Leuchtdiodenelemente (20, 22) und die diesen zugeordneten abbildenden Einrichtungen (32, 34) wenigstens einer der Leuchtanordnungen so ausgebildet sind, dass die von der Leuchtanordnung abgegebenen Lichtbündel (36, 40) im Wesentlichen gleich stark gebündelt sind.

5. Mobile Leuchte nach einem der vorhergehenden Ansprüche,
**dadurch gekennzeichnet,**
**dass** wenigstens eine abbildende Einrichtung der ersten und/oder zweiten Leuchtanordnung eine Linse (32, 34) umfasst, die vorzugsweise von dem jeweiligen Leuchtdiodenelement (20, 22) beabstandet angeordnet ist.

6. Mobile Leuchte nach einem der vorhergehenden Ansprüche,
**dadurch gekennzeichnet,**
**dass** die abbildenden Einrichtungen (32, 34) der beiden Leuchtanordnungen in einem Bauteil (16) einstückig ausgebildet sind.

7. Mobile Leuchte nach einem der vorhergehenden Ansprüche,
**dadurch gekennzeichnet,**
**dass** die erste und die zweite Leuchtanordnung jeweils gleiche Gesamtabstrahlrichtungen (G₁, G₂) aufweisen.

8. Mobile Leuchte nach einem der vorhergehenden Ansprüche,
**dadurch gekennzeichnet,**
**dass** die Hauptabstrahlrichtungen der Leuchtdiodenelemente (20, 22) und/oder die optische Achsen (38, 42) der abbildenden Einrichtungen (32, 34) der ersten und/oder der zweiten Leuchtanordnung in ersten und/oder zweiten spitzen Neigungswinkeln geneigt zu einer Gesamtabstrahlrichtung (G₁, G₂) der jeweiligen Leuchtanordnung verlaufen.

9. Mobile Leuchte nach Anspruch 8,
**dadurch gekennzeichnet,**
**dass** die Neigungswinkel innerhalb wenigstens einer der Leuchtanordnungen gleich groß sind.

10. Mobile Leuchte nach Anspruch 8 oder 9,
**dadurch gekennzeichnet,**
**dass** die zweiten Neigungswinkel kleiner als die ersten Neigungswinkel sind.

11. Mobile Leuchte nach einem der vorhergehenden Ansprüche,
**dadurch gekennzeichnet,**
**dass** sich die ersten und zweiten Lichtbündel (36, 40) in einer vorgegebenen Entfernung von den Leuchtanordnungen wenigstens teilweise innerhalb eines Kreises mit einem Durchmesser von 0,5 m bis 2 m, vorzugsweise von etwa 1m überlappen.

12. Mobile Leuchte nach einem der vorhergehenden Ansprüche,
**dadurch gekennzeichnet,**
**dass** die Leuchtdiodenelemente (20, 22) zur Abgabe von im Wesentlichen weißem Licht ausgebildet sind.

13. Mobile Leuchte nach einem der vorhergehenden Ansprüche,
**dadurch gekennzeichnet,**
**dass** die Leuchte als Fahrzeugleuchte, insbesondere als Fahrradleuchte, ausgebildet ist.

14. Mobile Leuchte nach einem der Ansprüche 1 bis 12,
**dadurch gekennzeichnet,**
**dass** die Leuchte als Hand- oder Taschenleuchte ausgebildet ist.

15. Mobile Leuchte nach einem der Ansprüche 1 bis 12,
dass die Leuchte als Stirnleuchte ausgebildet ist.
